**Europäisches Patentamt**

(19) **European Patent Office**

**Office européen des brevets**

(11) Veröffentlichungsnummer: **0 077 865**
**B1**

(12) **EUROPÄISCHE PATENTSCHRIFT**

(45) Veröffentlichungstag der Patentschrift:
29.01.86

(51) Int. Cl.⁴: **G 01 M 15/00**

(21) Anmeldenummer: 81810422.6

(22) Anmeldetag: 26.10.81

(54) Verfahren und Vorrichtung zur Durchführung eines Funktions-Tests, insbesondere eines Abgas-Emissionstests an einem Verbrennungsmotor.

(43) Veröffentlichungstag der Anmeldung:
04.05.83 Patentblatt 83/18

(45) Bekanntmachung des Hinweises auf die Patenterteilung:
29.01.86 Patentblatt 86/5

(84) Benannte Vertragsstaaten:
AT BE CH DE FR GB IT LI LU NL SE

(56) Entgegenhaltungen:
DE - A - 2 509 411
DE - A - 2 737 049
DE - A - 2 742 080
DE - A - 2 758 411
DE - A - 2 847 146
DE - A - 2 920 573
DE - B - 2 407 031

(73) Patentinhaber: **Lars Collin Consult AB,**
**Västerbergsgatan 3, S-43139 Mölndal (SE)**

(72) Erfinder: **Collin, Lars T., Västerbergsgatan 3,**
**S-43139 Mölndal (SE)**

(74) Vertreter: **Hepp, Dieter et al, HEPP & Partner AG**
**Marktgasse 18, CH-9500 Wil (CH)**

## Beschreibung

Die Erfindung betrifft ein Verfahren und eine Vorrichtung zur Durchführung eines Funktions-Tests, insbesondere eines Abgas-Emissionstests, an einem Verbrennungsmotor mittels einer Leerlauf-Beschleunigungsmethode, bei welcher der Motor in einem von der Last abgekuppelten Zustand durch eine Steuereinrichtung während wenigstens eines Beschleunigungs-Testzyklus gegen sein eigenes Trägheitsmoment zur Simulation des Verhaltens unter Last beschleunigt wird, wobei die Steuereinrichtung zur Steuerung der Motorbeschleunigung die Betätigungseinrichtung der Kraftstoffzufuhreinrichtung des Motors von wenigstens einem ersten Kraftstoff-Dosierwert mit einer vorgebbaren Verstellgeschwindigkeit auf wenigstens einen zweiten Kraftstoff-Dosierwert verändert.

Derartige Verfahren und Vorrichtungen sind allgemein bekannt und gebräuchlich und insbesondere in den folgenden Patentanmeldungen des Anmelders beschrieben: DE-A-2509411, DE-B-2407031, DE-A-2758411 und DE-A-2847146.

Bei derartigen Abgas-Emissionstests mittels der Leerlauf-Beschleunigungsmethode wird im Prinzip der Verbrennungsmotor z. B. eines Kraftfahrzeuges in die Getriebe-Leerlaufposition geschaltet und sodann der Motor durch Erhöhung der Kraftstoffzufuhr von einer Leerlaufdrehzahl auf eine höhere Drehzahl beschleunigt. Das vom Verbrennungsmotor abgegebene Drehmoment bewirkt dabei eine Beschleunigung der Massen des Motors und ggf. eines Teils des Getriebes. Vor allem das Rotations-Trägheitsmoment der Kurbelwelle, der Kupplungsscheibe und des Schwungrads erlaubt dabei eine effektive Belastung des Motors, mit dem sich Betriebszustände (Mitteldruck) simulieren lassen. Die Reibungsverluste des Motors werden bei diesen Testmethoden entweder vernachlässigt oder mit einem bestimmten Faktor bei der Auswertung berücksichtigt. Die im Motor auftretenden Trägheitsmomente und das abgegebene Drehmoment lassen sich wie folgt darstellen:

$$J_{gesamt} = J_{Motor} + J_{Getriebe};$$

$$\varphi = \frac{d\omega}{dt} \; ;$$

$$M_{Motor} = J_{gesamt} \cdot \varphi$$

Statt einer Messung der Abgas-Emission können auch alle anderen Funktionen des Motors gemessen werden, die belastungsabhängig sind, wie z.B. Geräusch-Emission oder Treibstoffverbrauch (dieser lässt sich in bekannter Weise indirekt durch Kohlenwasserstoff-Messung der Abgase ermitteln).

Durch die DE-A-2920573 ist eine Vorrichtung zum Messen von drehzahlabhängigen Betriebswerten eines Motors bekanntgeworden, bei der die Drehzahl gemessen und mit einer vorgegebenen Drehzahl verglichen wird, wobei die Übereinstimmung der gemessenen mit der vorgegebenen Drehzahl der Betriebswert gespeichert wird. Auf diese Weise soll die Messung der Betriebswerte automatisiert werden.

Es hat sich nun gezeigt, dass sich die bekannten Verfahren weiter verbessern und insbesondere hinsichtlich der Messgenauigkeit verfeinern lassen. Es hat sich nämlich herausgestellt, dass gewisse Abweichungen bei den Messergebnissen sich dadurch ergeben können, dass die getesteten Motore nicht die vom Werk angegebenen Soll-Drehmomente aufweisen, sondern insbesondere verschleiss- und wartungsbedingte Unterschiede der Drehmomentabgabe zu beobachten sind. Wenn aber ein derart getesteter Motor z. B. über eine geringere Leistung verfügt als die Soll-Leistung, dann wird dieser Motor bei Betätigung der Kraftstoffzufuhr-Einrichtung von einem ersten Dosierwert auf einen zweiten Dosierwert innerhalb einer vorgegebenen Zeitspanne nur eine geringere Drehzahl erreichen als ein Motor mit voller Leistung oder sogar höherer Leistung. Da, wie vorstehend ausgeführt, die Belastung des Motors ausschliesslich vom Trägheitsmoment und der Beschleunigung abhängt, bedeutet eine geringere Drehzahl während oder am Ende eines Testzyklus oder Zyklusabschnitts, dass ein Motor mit geringerer Leistung auch mit einer geringeren Test-Last beaufschlagt wird als ein Motor mit voller Leistung. Durch diese Schwankungen können sich Abweichungen des Mitteldrucks ergeben, welche zu Streuungen bei der Abgas-Emission führen. Bei überschlägigen Tests stören derartige Schwankungen weniger, jedoch bei grossen Genauigkeitsanforderungen kann dadurch das Testergebnis zu grossen Schwankungen unterworfen sein.

Aufgabe der Erfindung ist es demgemäss, ein Verfahren und eine Vorrichtung zu schaffen, welche das bekannte Leerlauf-Beschleunigungsverfahren verbessert und auf einfachste Weise Fehler durch unterschiedliche Drehmomentabgabe der getesteten Motoren vermeidet.

Erfindungsgemäss wird dies bei einem Verfahren der eingangs genannten Art mit den Merkmalen im Kennzeichen von Anspruch 1 und bei einer Vorrichtung der eingangs genannten Art mit den Merkmalen im Kennzeichen von Anspruch 7 erreicht.

Erfindungsgemäss wird also auf vorteilhafteste Weise eine derartige Korrektur der Auslenkung der Kraftstoffzufuhr-Einrichtung während des Tests durchgeführt, dass die Motoren eines bestimmten Typs gleicher Belastung aufgrund des Trägheitsmoments unterworfen werden. Das Trägheitsmoment selbst ist ja bei Motoren eines bestimmten Typs bekannt. Je schlechter dabei die Beschleunigung eines individuellen Motors ist, desto stärker wird die Kraftstoffzufuhr-Einrichtung ausgelenkt, um innerhalb vorgebbarer Zeitspanne bestimmte Beschleunigungswerte der trägen, rotierenden Massen zu erreichen.

Der Ablauf derartiger Tests und vor allem auch die programmgesteuerte Auslenkung der Kraftstoffzufuhr-Einrichtung wird dabei im voraus bestimmt, wobei die gewünschte Belastung individuell aufgrund des bekannten Trägheitsmoments eines jeden Motor-Typs festgelegt werden kann. Die Korrektur des vorgegebenen Programms erfolgt dann nach Durchführung wenigstens eines Vorbereitungs-Zyklus, wobei selbstverständlich auch die Einschaltung mehrerer Vorbereitunszyklen möglich ist, während welchen die Auslenkung der Kraftstoffzufuhr-Einrichtung allmählich so angepasst wird, dass die vorgegebenen Beschleunigungswerte erreicht werden.

Der Testzyklus kann vorteilhaft zusätzlich zu einem positiven Testabschnitt mit Drehzahlanstieg auch einen Testabschnitt mit negativer Beschleunigung, d. h. Drehzahlabfall, enthalten, um das Verhalten des Motors unter besonders wirklichkeitsgetreuen Bedingungen testen zu können. Dazu muss lediglich die Kraftstoffzufuhr gedrosselt werden, wobei der Motor durch Reibungskräfte und vor allem durch die für Kompressionsarbeit aufzuwendende Energie abgebremst wird. Durch Regelung der Kraftstoffzufuhr während des Abbremsens lässt sich dabei die negative Beschleunigung verringern und einem Beschleunigungs-Sollwert anpassen, sofern Abweichungen auftreten.

Besonders einfach lässt sich die Beschleunigungsmessung durchführen, wenn die Zeit zwischen wenigstens zwei vorgebbaren, von einer Drehzahl-Mess- und Speichereinrichtung gemessenen Drehzahlen des Verbrennungsmotors gemessen wird. Selbstverständlich lässt sich die Beschleunigung auch durch den Drehzahlanstieg bzw. die Drehzahldifferenz innerhalb einer bestimmten Zeitspanne ermitteln.

Dem Fachmann ist ohne weiteres geläufig, dass derartige Beschleunigungsmessungen basierend auf einer Drehzahlmessung mit Mikrorechnern in beliebigen Einzelschritten, oder auch kontinuierlich vorgenommen werden können. In gleicher Weise kann der Beschleunigungs-Sollwert über einen grösseren Zeitabschnitt und in einer Vielzahl von einzelnen diskreten Beschleunigungs-Sollwerten gespeichert und mit dem gemessenen Istwert verglichen werden. Ersichtlicherweise kann unter Verwendung von Mikroprozessoren auch unmittelbar aus den Beschleunigungswerten das jeweilige Motor-Drehmoment berechnet werden, sofern im voraus das Trägheitsmoment des getesteten Verbrennungsmotors gespeichert wurde. In diesem Fall ist es dann zweckmässig, wenn auch Drehmoment-Sollwerte gespeichert werden, um einen unmittelbaren Vergleich zwischen Istwert und Sollwert zu erreichen und dementsprechende Korrekturen vorzunehmen.

Besonders zweckmässig ist es, wenn ein Maximalwert für die Verstellgeschwindigkeit der Betätigungseinrichtung vorgesehen wird. Dies gewährleistet insbesondere, dass nicht dadurch falsche Ergebnisse erzielt werden, dass ein leistungsmässig völlig ungenügendes Exemplar eines Verbrennungsmotors schnelleren Beschleunigungszyklen seitens der Kraftstoffzufuhr-Einrichtung unterworfen wird als dies nach den Totzeiten der Aggregate (z.B. Vergaser, Lambda-Sonden usw.) zulässig ist.

Praktisch lässt sich mit der erfindungsgemässen Vorrichtung die Beschleunigungsmessung besonders einfach durchführen, wenn eine Drehzahl-Mess- und Speichereinrichtung mit einem Differenzierglied zur Bildung des Differentials $\frac{d\omega}{dt}$ vorgesehen ist, wobei $\omega$ die von der Drehzahlmesseinrichtung gemessene Winkelgeschwindigkeit des Verbrennungsmotors nach dem Auslenken der Kraftstoffzufuhr-Einrichtung und t die Zeit ist. Die Umformung einer Motordrehzahl in elektrische Signale ist allgemein gebräuchlich und wird auch in in Kraftfahrzeugen eingebauten Drehzahlmessern verwendet. Differenzierglieder zum Differenzieren von elektrischen Analog- oder Digitalsignalen sind ebenfalls bekannt und gebräuchlich, so dass sich hier eine einfache und genaue Messanordnung ergibt.

Die Erfindung ist im folgenden anhand eines Ausführungsbeispiels in den Zeichnungen näher erläutert. Es zeigen:

Fig. 1 die schematische Darstellung einer erfindungsgemässen Vorrichtung in Verbindung mit einem Personenkraftwagen;

Fig. 2 und 3 Diagramme von Testabläufen, und

Fig. 4 zwei Diagramme, welche die Gaspedalauslenkung in Abhängigkeit von der Zeit und das Motor-Drehmoment als Folge der Gaspedalauslenkung zeigen.

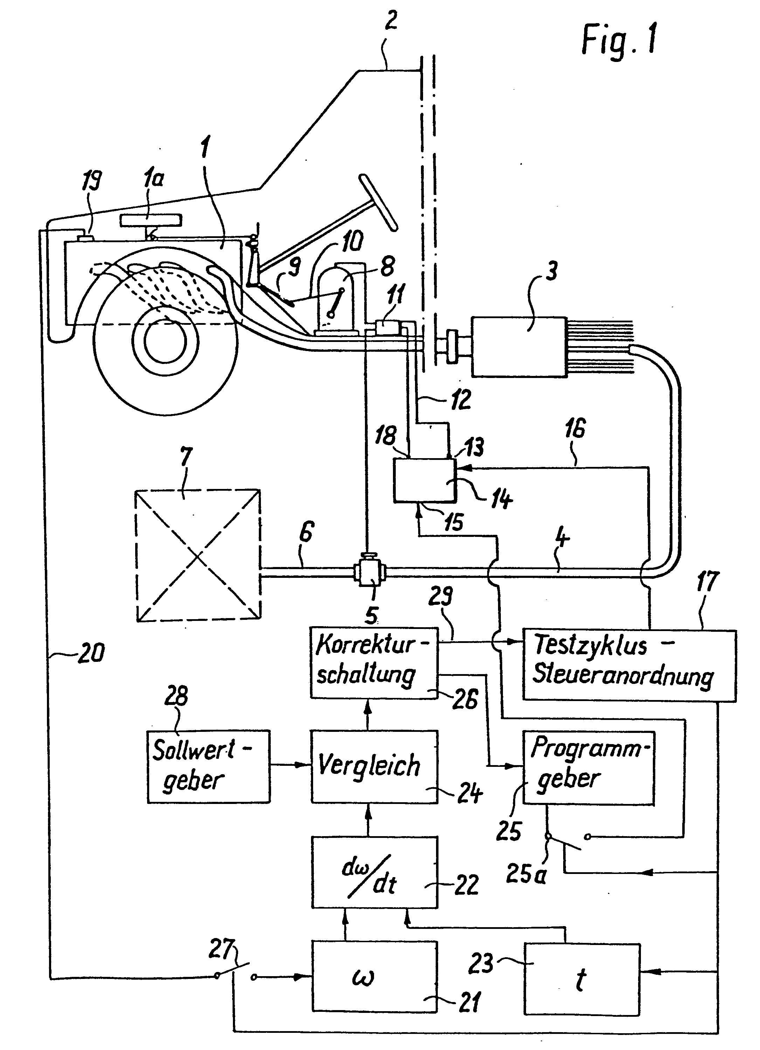

Gemäss Fig. 1 ist der Motor 1 eines nicht weiter dargestellten Fahrzeugs 2 über den Auspuff 3, eine Verbindungsleitung 4, ein Ventil 5 sowie eine Verbindungsleitung 6 an eine Messeinrichtung 7 zum Messen des Schadstoffgehalts der Abgase geschlossen. Der Motor 1 wird im Leerlauf betrieben und das Getriebe (nicht dargestellt) befindet sich in Leerlaufposition. Auf dem Fahrzeugboden ist zur Durchführung des Tests ein Stellglied 8 angebracht, welches das Gaspedal 9 des Motors 1 über ein Gestänge 10 betätigt. Das Stellglied 8 weist einen Servomotor auf (nicht dargestellt), der über einen Verteiler 11 und eine Leitung 12 mit dem Ausgang 13 einer Spannungsversorgungseinrichtung 14 verbunden ist. Die Spannungsversorgungseinrichtung 14 weist einen Ansteuereingang 15 auf. Durch wechselnde Eingangssignale am Ansteuereingang 15 kann die Spannung am Ausgang 13 und damit die Stromversorgung des Stellglieds 8 verändert werden. Die Spannungsversorgungseinrichtung 14 ist ausserdem über eine Leitung 16 mit einer Testzyklus-Steueranordnung 17 verbunden. Diese bestimmt generell den Ablauf des gesamten Testzyklus und schaltet die Spannungsversorgungseinrichtung 14 ein und aus. Ausserdem steuert sie die Signale an einem zweiten Ausgang 18 der Spannungsversorgungseinrichtung auf ein und aus. Dieser zweite Ausgang 18 ist über den Verteiler 11 mit dem Ventil 5 verbunden.

Am Motor 1 ist ein Fühler 19 vorgesehen, welcher die Zündimpulse an der Zündspule abtastet und über eine Leitung 20 an einen Drehzahlmesser 21 weitergibt. Der Drehzahlmesser 21 ist ausgangsseitig mit einem Differenzierglied 22 verbunden, welches ausserdem mit einem Zeitgeber 23 verbunden ist. Das Differenzierglied 22 ist ausgangsseitig mit einer Vergleichsanordnung 24 verbunden, deren zweiter Eingang an einen Sollwertgeber 28 angeschlossen ist. Im Programmgeber 25 ist entsprechend dem jeweiligen Motor 1 und/oder Fahrzeugtyp ein bestimmter Sollwert-Beschleunigungsverlauf gespeichert. Ebenfalls gespeichert ist in einem Programmgeber 25 ein dem jeweiligen Motor- und Fahrzeugtyp entsprechender Ablauf von Steuersignalen zum Betätigen des Gaspedals. Das vorgegebene Testprogramm ist jedoch durch eine Korrekturschaltung 26 veränderbar.

Selbstverständlich kann die Drehzahlmessung auch dadurch erfolgen, dass Signale am Unterbrecher oder an einem Kerzenstecker des Motors 1 abgenommen werden, oder aber dass z.B. eine Lichtschranke verwendet wird. Auch wäre es denkbar, auf den Drehzahlmesser 21 ganz zu verzichten und das Differenzierglied 22 derart auszubilden, dass es an einen im Fahrzeug befindlichen Drehzahlmesser angeschlossen werden kann und von diesem drehzahlabhängige Signale abgreift. Ausserdem ist es selbstverständlich auch denkbar, ein beliebiges anderes Stellglied 8 zu verwenden und die Ansteuerung z.B. hydraulisch durchzuführen. Auch kann das Stellglied 8 statt mit dem Gaspedal 9 z.B. direkt mit dem Vergaser 1a des Motors 1 verbunden werden. Sofern das Fahrzeug über eine Einspritzpumpe mit Kraftstoff versorgt wird, kann auch direkt die Einspritzpumpe angesteuert werden.

Im Betriebsablauf arbeitet die Vorrichtung gemäss Fig. 1 wie folgt: Zunächst schaltet die Testzyklus-Steueranordnung 17 die Spannungsversorgungseinrichtung 14 zur Durchführung eines Vorbereitungszyklus ein, aktiviert die Gesamtanordnung, verbindet den Programmgeber 25 über einen Schalter 25a mit dem Ansteuereingang 15 der Spannungsversorgungseinrichtung 14, welche daraufhin das Stellglied 8 ansteuert, wodurch eine Beschleunigung des Motors 1 entsprechend den vom Programmgeber 25 abgegebenen Signalen erfolgt. Gleichzeitig schliesst die Testzyklus-Steueranordnung 17 auch einen Schalter 27, so dass die Drehzahlsignale über Leitung 20 an den Drehzahlmesser 21 gelangen. Durch das gleichzeitige Einschalten des Zeitgebers wird eine Zeitbasis an das Differenzierglied 22 geliefert, welches die zeitabhängige Änderung der Drehzahl bzw. die Beschleunigung des Motors misst. Vom Differenzierglied 22 werden die ermittelten Beschleunigungswerte dem Vergleicher 24 zugeführt, der eingangsseitig vom Sollwertgeber 28 mit den Beschleunigungs-Sollwerten gespeist wird.

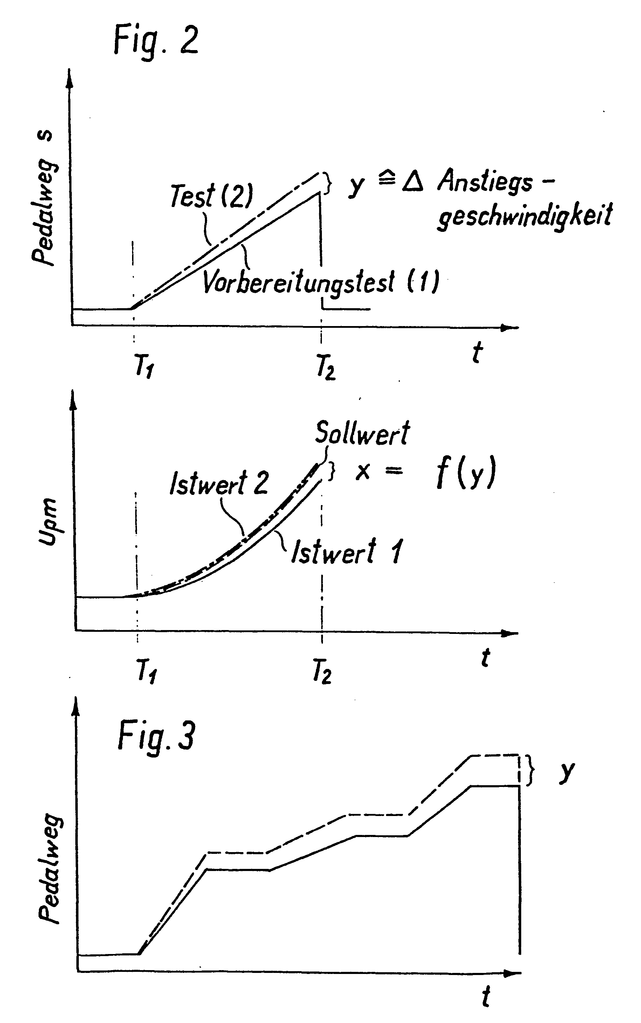

Das erste Diagramm in Fig. 2 zeigt den Pedalweg S beim Vorbereitungstest (1) in Abhängigkeit von der Zeit. Die Pedalauslenkung ist dabei linear gewählt, doch sind selbstverständlich auch andere Kurvenverläufe denkbar. Das zweite Diagramm in Fig. 2 zeigt die Drehzahl des Motors 1 in Abhängigkeit von der Zeit. Der Drehzahl-Istwert 1 zeigt die Drehzahlzunahme bzw. Beschleunigung des Motors 1 während des Vorbereitungstests als Istwert (1). Ausserdem ist der für den Motor 1 im Sollwertgeber 28 vorgegebene Beschleunigungs-Sollwert als strichpunktierte Linie dargestellt. Ersichtlicherweise besteht eine erhebliche Abweichung zwischen den beiden Werten, die darauf zurückzuführen ist, dass der Motor 1 aufgrund irgendeines leichten Defekts nicht das vorgegebene Drehmoment abgibt und dementsprechend nicht in der Lage ist, in der vorgesehenen Zeit die rotierenden und anderen sich bewegenden Massen, welche sein Trägheitsmoment bestimmen, auf die vorgegebene Drehzahl zu beschleunigen. Diese Abweichung zwischen Sollwert und Istwert (1) wird im Vergleicher 24 registriert und ein der Abweichung proportionales Signal an die Korrekturschaltung 26 abgegeben. Diese wiederum gibt ausgangsseitig ein Verstellsignal an den Programmgeber 25 ab und leitet ausserdem ein Signal über eine Leitung 29 an die Testzyklus-Steueranordnung 17, die damit über den Vollzug der Korrektur im Programmgeber 25 informiert wird. Ausserdem ist die Testzyklus-Steueranordnung 17 derart ausgelegt, dass im Falle grosser Beschleunigungsabweichungen, und damit grosser von der Korrekturschaltung 26 abgegebener Korrektursignale, nach dem ersten Vorbereitungszyklus ein zweiter Vorbereitungszyklus durchgeführt wird, um zu überprüfen, ob die Korrektur zu einer Annäherung des Istwerts 1 an den Sollwert (Fig. 2) geführt hat. Ausserdem weist die Testzyklus-Steueranordnung einen Maximalwertbegrenzer auf (nicht dargestellt), welcher den gesamten Testzyklus unterbricht und ein Fehlersignal abgibt, sobald die im Vergleicher 24 festgestellte Abweichung und damit das Korrektursignal am Ausgang der Korrekturschaltung 26 einen bestimmten Maximalwert übersteigt. Durch den Testabbruch wird das Bedienungspersonal darauf aufmerksam gemacht, dass der Motor 1 eine zu grosse Abweichung vom Sollwert aufweist und vermutlich defekt ist.

Nach Abschluss des Vorbereitungszyklus leitet die Testzyklus-Steueranordnung 17 den eigentlichen Testablauf ein, wobei wiederum die Spannungsversorgungseinrichtung 14 eingeschaltet wird und ausserdem auch das Ventil 5 geöffnet wird, um die Messeinrichtung 7 zur Messung des Schadstoffgehalts mit dem Auspuff 3 zu verbinden. Das erste Diagramm in Fig. 3 zeigt den Test (2) als gestrichelte Linie, wobei ersichtlicherweise die Korrekturschaltung 26 den Programmgeber 25 derart beeinflusst hat, dass ein höheres Stellsignal an die Spannungsversorgungseinrichtung 14 abgegeben wurde und dadurch das Stellglied 8 schneller und auf einen höheren Endwert verstellt wurde. Die Veränderung der Verstellgeschwindigkeit entspricht dabei dem Wert Y gemäss erstem Diagramm in Fig. 2. Dieser Korrekturwert lässt sich empirisch für jeden bestimmten Fahrzeugtyp durch entsprechende Tests ermitteln, in deren Verlauf die Abhängigkeit von Drehzahlveränderungen bei bestimmter Last von der jeweiligen Gaspedalstellung ermittelt wird. Es bedeutet für den Fachmann ersichtlicherweise keine Schwierigkeit, nach der Festlegung des Korrekturfaktors diesen in der Korrekturschaltung 26 zu speichern, so dass der Programmgeber 25 entsprechend der jeweiligen Abweichung angesteuert und korrigiert wird. Fig. 2 zeigt ausserdem den Istwert (2) des Drehzahlanstiegs beim Test. Durch die veränderte Auslenkung des Gaspedals 9 beim Test (verglichen mit dem Vorbereitungstest) ist die Motorbeschleunigung angestiegen und entspricht praktisch der Sollwertkurve. Sobald der Test zum Zeitpunkt T2 abgeschlossen ist, schaltet die Testzyklus-Steueranordnung 17 die verschiedenen Bauteile wieder ab und schliesst insbesondere durch Ausschalten der Spannungsversorgungseinrichtung 14 das Ventil 5, so dass die Messeinrichtung 7 vom Auspuff 3 getrennt wird. Damit wird sichergestellt, dass nur während des Zeitraums T1 bis T2 erzeugte Abgase in der Messeinrichtung 7 gesammelt werden. Da das Fahrzeug während des Tests auf die Soll-Beschleunigungskurve (Fig. 2) gebracht wurde, ist ausserdem sichergestellt, dass die für den Test erforderliche Belastung des Motors durch das eigene Trägheitsmoment dem Sollwert entspricht.

Fig. 3 zeigt ein weiteres Diagramm, aus welchem ersichtlich ist, dass selbstverständlich beliebige Testzyklen durchlaufen werden können, wobei lediglich eine Änderung des Programmgebers 25 und des Sollwertgebers 28 vorzusehen ist. Die Beschleunigungswerte des Motors 1 während eines solchen Tests können entweder nur unter Berücksichtigung der Anfangs- und der Enddrehzahl des Vorbereitungszyklus ermittelt werden, oder aber kontinuierlich gemessen, z.B. integriert und mit dem Sollwert verglichen werden. Dies hängt ganz von den Bedürfnissen des Einzelfalls, von der Dauer des Vorbereitungstests, der Linearität des Drehzahlverlaufs und der Art des Testverlaufs ab. Derartige Massnahmen sind dem Fachmann ohne weiteres bekannt und gebräuchlich.

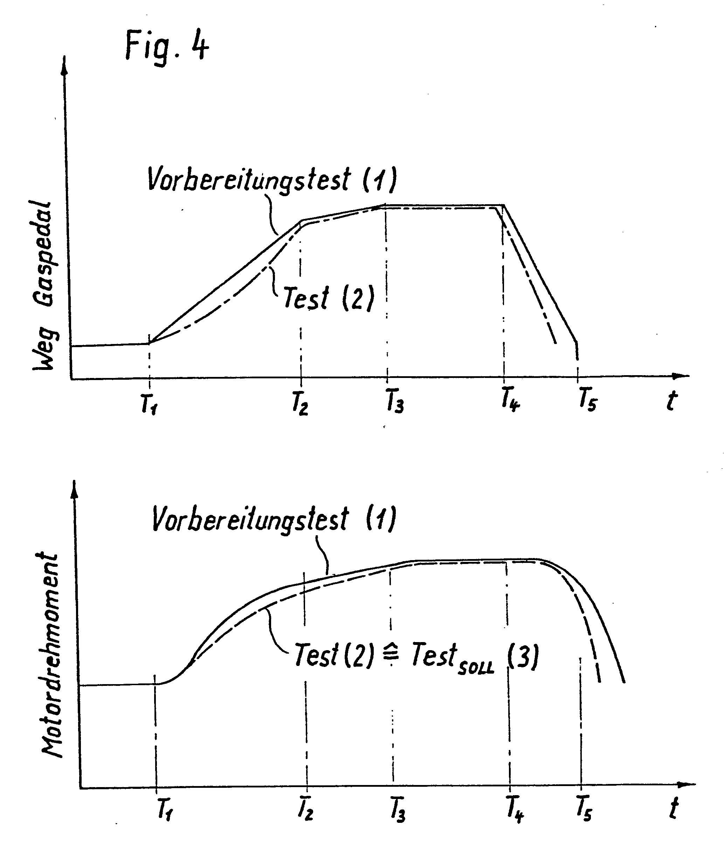

Im ersten Diagramm gemäss Fig. 4 ist der Weg des Gaspedals zunächst während des Vorbereitungstests (1) in der Zeitspanne T1 bis T5 dargestellt. Der Testzyklus enthält dabei zwei Abschnitte T1 bis T3 mit positiver Beschleunigung, einen Abschnitt T3 bis T4 ohne Beschleunigung und einen Abschnitt T4 bis T5 mit negativer Beschleunigung. Bei diesem Test ist im Sollwertgeber 28 noch das Trägheitsmoment des Motors 1 gespeichert, und vor dem Vergleich im Vergleicher 24 werden die beiden Beschleunigungssollwerte noch jeweils mit dem Trägheitsmoment multipliziert. Da das Trägheitsmoment für sämtliche Motoren eines bestimmten Typs einer Automarke gleich ist und vorbestimmt werden kann, bedeutet dies keinerlei Probleme. Nach der bereits eingangs erwähnten Formel ergibt sich das Drehmoment aus dem Produkt von J gesamt x $\frac{d\omega}{dt}$. Im zweiten Diagramm gemäss Fig. 4 ist deshalb das Motordrehmoment aufgezeichnet, das als «Antwort» auf die Auslenkung des Gaspedals gemäss dem ersten Diagramm ermittelt wird. Wie dabei ersichtlich wird, weicht das Motordrehmoment des Vorbereitungstests (1) vom Sollwert (3) ab, der gestrichelt dargestellt ist. Beide Kurven sind dabei gekrümmt, da der Test über einen grösseren Abschnitt des Drehmomentverlaufs durchgeführt wird als die Tests gemäss Fig. 2 und dadurch die Unlinearität der Drehmomentkurve deutlich zum Ausdruck kommt. Die Korrekturschaltung 26 ist aufgrund empirischer Untersuchungen des Drehmomentverhaltens des Motors 1 mit Korrekturwerten programmiert, welche die Unlinearität bei der Abgabe von Korrektursignalen an den Programmgeber 25 berücksichtigen. Da sich beim Vorbereitungstest gezeigt hat, dass der Motor 1 über ein höheres Drehmoment verfügt als typischerweise für den Motor zu erwarten war, wird die Korrektur negativ vorgenommen, d. h. dass der Gaspedalanstieg und auch die Gaspedalrückführung zwischen T4 und T5 [strichpunktiert als Test (2) dargestellt] flacher und «unter» dem Verlauf des Vorbereitungstests ansteigt und abfällt. Wie im zweiten Diagramm dargestellt, folgt das Motordrehmoment während dem Test (2) voll dem Sollwert (3).

**Patentansprüche**

1. Verfahren zur Durchführung eines Funktions-Tests, insbesondere eines Abgas-Emissionstests, an einem Verbrennungsmotor mittels einer Leerlauf-Beschleunigungsmethode, bei welcher der Motor (1) in einem von der Last abgekuppelten Zustand durch eine Steuereinrichtung während wenigstens eines Beschleunigungs-Testzyklus gegen sein eigenes Trägheitsmoment zur Simulation des Verhaltens unter Last beschleunigt wird, wobei die Steuereinrichtung zur Steuerung der Motorbeschleunigung die Betätigungseinrichtung (9) der Kraftstoffzufuhreinrichtung des Motors von wenigstens einem ersten Kraftstoff-Dosierwert mit einer vorgebbaren Verstellgeschwindigkeit auf wenigstens einen zweiten Kraftstoff-Dosierwert verändert, dadurch gekennzeichnet, dass vor dem Beschleunigungs-Testzyklus des Motors (1) wenigstens ein Vorbereitungszyklus durchgeführt wird, während welchem die Betätigungseinrichtung (9) der Kraftstoffzufuhreinrichtung im Sinne einer Beschleunigung des Motors betätigt wird und gleichzeitig die Beschleunigung der Motordrehzahl während wenigstens eines Zeitraums gemessen und der gemessene Beschleunigungswert mit einem vorgegebenen Sollwert verglichen wird, und dass schliesslich bei einer Sollwertabweichung im Anschluss daran die Verstellgeschwindigkeit der Betätigungseinrichtung und/oder wenigstens einer der Dosierwerte der Betätigungseinrichtung für den nachfolgenden Testzyklus oder einen weiteren Vorbereitungszyklus in einem vorbestimmbaren Verhältnis derart korrigiert werden, dass die Betätigungseinrichtung beim folgenden Zyklus schneller ausgelenkt und/oder auf einen höheren Kraftstoff-Dosierwert ausgelenkt wird, wenn die Beschleunigung während des Vorbereitungszyklus geringer ist als der Beschleunigungs-Sollwert, bzw. dass sie langsamer und/oder auf einen niedereren Kraftstoff-Dosierwert ausgelenkt wird, wenn die Beschleunigung während des Vorbereitungszyklus grösser ist als der Beschleunigungs-Sollwert.

2. Verfahren nach Anspruch 1, dadurch gekennzeichnet, dass ein Maximalwert für die Verstellgeschwindigkeit der Betätigungseinrichtung vorgesehen ist.

3. Verfahren nach Anspruch 1, dadurch gekennzeichnet, dass zur Beschleunigungsmessung die Zeit zwischen wenigstens zwei vorgebbaren, von einer Drehzahl-Mess- und Speichereinrichtung gemessenen Drehzahlen des Verbrennungsmotors gemessen wird.

4. Verfahren nach Anspruch 1, dadurch gekennzeichnet, dass zur Beschleunigungsmessung der Drehzahlanstieg zwischen wenigstens zwei vorgebbaren Zeitpunkten nach Verlagerung der Betätigungseinrichtung der Kraftstoffzufuhreinrichtung auf wenistens den zweiten Kraftstoff-Dosierwert gemessen wird.

5. Verfahren nach einem der Ansprüche 1 bis 4, dadurch gekennzeichnet, dass der Drehmomentverlauf des Verbrennungsmotors ermittelt und mit einem vorgebbaren Drehmoment-Sollwert-Verlauf verglichen wird, und dass die Korrektur der Aussteuerung der Kraftstoffzufuhreinrichtung in Abhängigkeit von Abweichungen des Drehmomentverlaufs bewirkt wird.

6. Verfahren nach einem der vorhergehenden Ansprüche, dadurch gekennzeichnet, dass wenigstens zwei Beschleunigungs-Testzyklen durchgeführt werden, wobei während eines Testzyklus der Motor positiv beschleunigt und mit wenigstens einem positiven bzw. ansteigenden Sollwert verglichen wird, und wobei während des zweiten Testzyklus der Motor negativ beschleunigt, d.h. durch Reduktion der Kraftstoff-Dosierung abgebremst und mit wenigstens einem negativen bzw. abfallenden Sollwert verglichen wird.

7. Vorrichtung zur Durchführung eines Funktions-Tests, insbesondere eines Abgas-Emissionstests, an einem Verbrennungsmotor mittels einer Leerlauf-Beschleunigungsmethode, bei welcher der Motor (1) in einem von der Last abgekuppelten Zustand durch eine Steuereinrichtung (14) während wenigstens eines Beschleunigungs-Testzyklus gegen sein eigenes Trägheitsmoment zur Simulation des Verhaltens unter Last beschleunigt wird, wobei die Steuereinrichtung (14) zur Steuerung der Motorbeschleunigung die Betätigungseinrichtung (9) der Kraftstoffzufuhreinrichtung des Motors (1) von wenigstens einem ersten Kraftstoff-Dosierwert mit einer vorgebbaren Verstellgeschwindigkeit auf wenigstens einen zweiten Kraftstoff-Dosierwert verändert, dadurch gekennzeichnet, dass eine mit dem Motor verbindbare Beschleunigungs-Messeinrichtung (21, 22) zur Messung und Speicherung der Beschleunigung, bzw. der Drehzahlveränderung des Motors zwischen wenigstens zwei Kraftstoffdosierwerten eines Vorbereitungszyklus vorgesehen ist, dass die Beschleunigungs-Messeinrichtung mit einer Vergleichsanordnung (24) verbunden ist, welche ihrerseits mit einem Sollwertgeber (28) für die Motorbeschleunigung bzw. die Drehzahlveränderung verbunden ist, und dass die Vergleichsanordnung (24) ausgangsseitig an einen Ansteuereingang (15) der Steuereinrichtung (14) für die Kraftstoffzufuhreinrichtung angeschlossen und derart ausgebildet ist, dass bei einer Sollwertabweichung die Verstellgeschwindigkeit der Betätigungseinrichtung (9) und/oder wenigstens einer der Dosierwerte der Betätigungseinrichtung (9) für den nachfolgenden Testzyklus oder einen weiteren Vorbereitungszyklus in einem vorbestimmbaren Verhältnis derart korrigiert werden, dass die Betätigungseinrichtung (9) beim folgenden Zyklus schneller ausgelenkt und/oder auf einen höheren Kraftstoff-Dosierwert ausgelenkt wird, wenn der gemessene Beschleunigungswert kleiner ist als der Beschleunigungs-Sollwert, bzw. dass sie langsamer und/oder auf einen niedereren Kraftstoff-Dosierwert ausgelenkt wird, wenn der gemessene Beschleunigungswert grösser ist als der Sollwert und dass eine Testzyklus-Steueranordnung (17) zur Ablaufsteuerung von Vorbereitungs- und Testzyklus vorgesehen ist.

8. Vorrichtung nach Anspruch 7, dadurch gekennzeichnet, dass zur Beschleunigungsmessung eine Drehzahl-Mess- und Speichereinrichtung zur Messung des Zeitablaufs zwischen wenigstens zwei vorgebbaren Drehzahlwerten vorgesehen ist.

9. Vorrichtung nach Anspruch 7, dadurch gekennzeichnet, dass zur Beschleunigungsmessung eine Drehzahl-Mess- und Speichereinrichtung zur Messung der erreichten Motordrehzahl nach einer vorgebbaren Zeitspanne vorgesehen ist.

10. Vorrichtung nach Anspruch 7, dadurch gekennzeichnet, dass zur Beschleunigungsmessung eine Drehzahl-Mess- und Speichereinrichtung mit einem Differenzierglied zur Bildung des Differentials $\frac{d\omega}{dt}$ vorgesehen ist, wobei $\omega$ die von der Drehzahlmesseinrichtung gemessene Winkelgeschwindigkeit des Verbrennungsmotors nach dem Auslenken der Kraftstoffzufuhreinrichtung und $t$ die Zeit ist.

## Claims

1. A method of carrying out an operating test, in particular an exhaust emission test, on an internal combustion engine, by means of an idle-acceleration method wherein the engine (1), in a condition of being disconnected from the load, is accelerated against its own moment of inertia by a control means for at least one acceleration test cycle, to simulate the performance under load, the control means for controlling acceleration of the engine altering the actuating means (9) of the fuel supply means of the engine from at least one first fuel metering value to at least one second fuel metering value, at a predeterminable speed of adjustment, characterised in that prior to the acceleration test cycle of the engine (1), at least one preparation cycle is carried out, during which the actuating means (9) of the fuel supply means is actuated to cause acceleration of the engine and at the same time acceleration of the engine speed is measured during at least one period of time and the measured acceleration value is compared to a predetermined reference value, and that finally in the event of a deviation from the reference value, subsequently thereto the speed of adjustment of the actuating means and/or at least one of the metering values of the actuating means for the subsequent test cycle or a further preparation cycle is corrected in a predeterminable relationship in such a way that in the following cycle the actuating means is deflected more rapidly and/or is deflected to a higher fuel metering value if acceleration during the preparation cycle is lower than the acceleration reference value, or the actuating means is deflected more slowly and/or to a lower fuel metering value if acceleration during the preparation cycle is greater than the acceleration reference value.

2. A method according to claim 1, characterised in that a maximum value is provided for the speed of adjustment of the actuating means.

3. A method according to claim 1, characterised in that for the purposes of measuring acceleration, the time between at least two predeterminable internal combustion engine speeds which are measured by a rotary speed measuring and storage means is measured.

4. A method according to claim 1, characterised in that for the purposes of measuring acceleration, the rise in rotary speed is measured between at least two predeterminable times after the actuating means of the fuel supply means has been displaced to at least the second fuel metering value.

5. A method according to one of claims 1 to 4, characterised in that the torque characteristic of the internal combustion engine is detected and compared to a predeterminable torque characteristic reference value and that correction in respect of actuating of the fuel supply means is effected in dependence on deviations in the torque characteristic.

6. A method according to one of the preceding claims, characterised in that at least to acceleration test cycles are carried out, wherein during one test cycle the engine is positively accelerated and compared to at least one positive or rising reference value and wherein during the second test cycle the engine is negatively accelerated, that is to say, decelerated by reducing the fuel metering, and compared to at least one negative or falling reference value.

7. Apparatus for carrying out an operating test, in particular an exhaust emission test, on an internal combustion engine by means of an idle-acceleration method wherein the engine (1), in a condition of being disconnected from the load, is accelerated against its own moment of inertia by a control means (14) for at least one acceleration test cycle, to stimulate the performance under load, wherein the control means (14) for controlling acceleration of the engine alters the actuating means (9) of the fuel supply means of the engine (1) from at least one first fuel metering value to at least one second fuel metering value, at a predeterminable speed of adjustment, characterised in that there is provided an acceleration measuring means (21, 22), which can be connected to the engine, for measuring and storing the acceleration or the variation in the speed of rotation of the engine between at least two fuel metering values of a preparation cycle, that the acceleration measuring means is connected to a comparison arrangement (24) which in turn is connected to a reference value generator (28) in respect of engine acceleration or variation in speed of rotation, and that the comparison arrangement (24) is connected on its output side to an actuating input (15) of the control means (14) for the fuel supply means, and is such that in the event of a deviation from the reference value the speed of adjustment of the actuating means (9) and/or at least one of the metering values of the actuating means (9), for the subsequent test cycle or a further preparation cycle, is corrected in a predeterminable relationship in such a way that in the following cycle the actuating means (9) is deflected more rapidly and/or is deflected to a higher fuel metering value if the measured acceleration value is lower than the acceleration reference value, or it is deflected more slowly and/or to a lower fuel metering value if the measured acceleration value is greater than the reference value, and that there is provided a test cycle control arrangement (17) for controlling the performance of the preparation and test cycles.

8. Apparatus according to claim 7, characterised in that for the purposes of measuring acceleration, there is provided a rotary speed measuring and storage means for measuring the time lapse between at least two predeterminable rotary speed values.

9. Apparatus according to claim 7, characterised in that for the purposes of measuring acceleration, there is provided a rotary speed measuring and storage means, for measuring the engine speed of rotation attained, after a predeterminable period of time.

10. Apparatus according to claim 7, characterised in that, for the purposes of measuring acceleration, there is provided a rotary speed measuring and storage means having a differentiating means for forming the differential $d\omega/dt$, wherein $\omega$ is the angular speed of the internal combustion engine, as measured by the rotary speed measuring means, after deflection of the fuel supply means, and t is time.

## Revendications

1. Procédé pour la mise en œuvre d'un test fonctionnel, spécialement d'un test d'émission de gaz brûlé, dans un moteur à combustion interne au moyen d'un procédé d'accélération au point-mort, dans lequel le moteur (1), en état non accouplé à une charge, est accéléré au moyen d'un dispositif de commande au moins pendant un cycle de test d'accélération, à l'encontre de son propre moment d'inertie, afin de simuler son comportement en charge, ledit dispositif de commande destiné à la commande de l'accélération du moteur modifiant, à une vitesse de réglage prédéfinissable, le dispositif d'actionnement (9) du dispositif d'alimentation en carburant du moteur à partir d'au moins une première valeur de dosage du carburant jusqu'à une seconde valeur de dosage du carburant, caractérisé en ce que, avant le cycle de test d'accélération du moteur (1), au moins un cycle préparatoire est effectué, pendant lequel le dispositif d'actionnement (9) du dispositif d'alimentation en carburant est actionné dans le sens d'une accélération du moteur, en mesurant simultanément l'accélération de la vitesse de rotation du moteur pendant au moins un intervalle de temps et en comparant la valeur d'accélération mesurée avec une valeur de référence prédéfinie, et en ce que finalement, en cas d'écart par rapport à ladite valeur de référence, la vitesse de réglage du dispositif d'actionnement et/ou au moins l'une des valeurs de dosage dudit dispositif d'actionnement est ensuite corrigée pour le cycle de test suivant ou un autre cycle préparatoire dans une proportion prédéfinissable telle que le dispositif d'actionnement est réglé, dans le cycle suivant, pour agir plus rapidement lorsque l'accélération obtenue au cours dudit cycle préparatoire était plus faible que la valeur de référence d'accélération, ou plus lentement et/ou avec une valeur de dosage en carburant plus faible lorsque l'accélération obtenue au cours dudit cycle préparatoire était supérieure à ladite valeur de référence d'accélération.

2. Procédé selon la revendication 1, caractérisé en ce qu'il comprend une valeur maximale pour la vitesse de réglage dudit dispositif d'actionnement.

3. Procédé selon la revendication 1, caractérisé en ce que, pour mesurer ladite accélération, on mesure l'intervalle de temps séparant au moins deux vitesses de rotation prédéfinissables du moteur à combustion interne mesurées au moyen d'un dispositif de mesure et d'enregistrement de la vitesse de rotation.

4. Procédé selon la revendication 1, caractérisé en ce que, pour mesurer ladite accélération, on mesure l'augmentation de la vitesse de rotation entre au moins deux instants prédéfinissables après avoir placé le dispositif d'actionnement du dispositif d'alimentation en carburant sur au moins la seconde valeur de dosage en carburant.

5. Procédé selon l'une quelconque des revendications 1 à 4, caractérisé en ce que l'on détermine la courbe du couple de rotation du moteur à combustion interne, en la comparant avec une courbe prédéfinissable de valeur de référence du couple de rotation, et en ce que la correction du réglage du dispositif d'alimentation en carburant est effectuée en fonction des écarts présentés par ladite courbe du couple de rotation.

6. Procédé selon l'une quelconque des revendications précédentes, caractérisé en ce qu'au moins deux cycles de test d'accélération sont effectués, le moteur étant accéléré de façon positive pendant un premier cycle de test et ladite accélération positive étant alors comparée avec au moins une valeur de référence positive ou croissante, et le moteur étant accéléré de manière négative pendant le second cycle de test, c'est-à-dire étant freiné au moyen d'une diminution du dosage en carburant, ladite accélération négative étant alors comparée avec au moins une valeur de référence négative ou décroissante.

7. Dispositif pour la mise en œuvre d'un test fonctionnel, spécialement d'un test d'émission de gaz brûlé, dans un moteur à combustion interne au moyen d'un procédé d'accélération au point-mort, dans lequel le moteur (1), en état non accouplé à une charge, est accéléré au moyen d'un dispositif de commande (14) au moins pendant un cycle de test d'accélération, à l'encontre de son propre moment d'inertie, afin de simuler son comportement en charge, ledit dispositif de commande (14) destiné à la commande de l'accélération du moteur modifiant, à une vitesse de réglage prédéfinissable, le dispositif d'actionnement (9) du dispositif d'alimentation en carburant du moteur (1) à partir d'au moins une première valeur de dosage du carburant jusqu'à une seconde valeur de dosage du carburant, caractérisé en ce qu'il comprend un dispositif de mesure d'accélération (21, 22) apte à être relié audit moteur et destiné à mesurer et à enregistrer l'accélération ou la variation de la vitesse de rotation dudit moteur entre au moins deux valeurs de dosage en carburant d'un cycle préparatoire, en ce que ledit dispositif de mesure d'accélération est relié à un dispositif comparateur (24) qui est relié pour sa part à un générateur de signaux de référence (28) pour l'accélération du moteur ou la variation de la vitesse de rotation, et en ce que le dispositif comparateur (24) est relié par sa sortie à une entrée de commande (15) du dispositif de commande (14) pour le dispositif d'alimentation en carburant, et est conçu de manière à ce qu'en cas d'écart par rapport à la valeur de référence la vitesse de réglage du dispositif d'actionnement (9) et/ou au moins l'une des valeurs de dosage dudit dispositif d'actionnement (9) soit corrigée pour le cycle de test suivant ou un autre cycle préparatoire dans une proportion prédéfinissable telle que le dispositif d'actionnement (9) est réglé, dans le cycle suivant, pour agir plus rapidement lorsque l'accélération obtenue au cours dudit cycle préparatoire était plus faible que la valeur de référence d'accélération, ou plus lentement et/ou avec une valeur de dosage en carburant plus faible lorsque l'accélération obtenue au cours dudit cycle préparatoire était supérieure à ladite valeur de référence, et en ce qu'il comporte un dispositif de commande de cycle de test (17) pour la commande du déroulement du cycle préparatoire et du cycle de test.

8. Dispositif selon la revendication 7, caractérisé en ce qu'il comprend, pour la mesure d'accélération, un dispositif de mesure et d'enregistrement de la vitesse de rotation destiné à mesurer le déroulement de celle-ci dans le temps entre au moins deux valeurs de vitesse de rotation prédéfinissables.

9. Dispositif selon la revendication 7, caractérisé en ce qu'il comprend, pour la mesure d'accélération, un dispositif de mesure et d'enregistrement de la vitesse de rotation destiné à mesurer la vitesse de rotation atteinte par le moteur au bout d'un intervalle de temps prédéfinissable.

10. Dispositif selon la revendication 7, caractérisé en ce qu'il comprend pour la mesure d'accélération, un dispositif de mesure et d'enregistrement de la vitesse de rotation pourvu d'un circuit différenciateur pour calculer la différentielle $\dfrac{d\omega}{dt}$,

dans laquelle $\omega$ est la vitesse angulaire du moteur à combustion interne mesurée par le dispositif de mesure de vitesse de rotation après le réglage du dispositif d'alimentation en carburant, et t est le temps.

0077865

Fig.1

# Fig. 2

Pedalweg s

Test (2)

$y \,\hat{=}\, \Delta$ Anstiegsgeschwindigkeit

Vorbereitungstest (1)

$T_1$ $T_2$ t

Upm

Sollwert

Istwert 2

$\} \; x = \; f(y)$

Istwert 1

$T_1$ $T_2$ t

# Fig. 3

$\} \; y$

Pedalweg

t

13

0077865

Fig. 4

Vorbereitungstest (1)

Weg Gaspedal

Test (2)

$T_1$   $T_2$   $T_3$   $T_4$   $T_5$   $t$

Vorbereitungstest (1)

Motordrehmoment

Test (2) $\hat{=}$ Test$_{SOLL}$ (3)

$T_1$   $T_2$   $T_3$   $T_4$   $T_5$   $t$

15